# EUROPÄISCHE PATENTSCHRIFT

(11) **EP 2 384 300 B1**
(45) Veröffentlichungstag und Bekanntmachung des Hinweises auf die Patenterteilung: **17.07.2013**
(21) Anmeldenummer: 09799518.7
(22) Anmeldetag: 02.12.2009
(51) Int. Cl.: B64F 5/00

(54) **VERFAHREN UND VORRICHTUNG ZUR ÄUSSEREN ENTEISUNG VON FLUGZEUGEN**
METHOD AND DEVICE FOR EXTERNAL DE-ICING OF AIRCRAFT
PROCEDE ET DISPOSITIF DE DEGIVRAGE EXTERIEUR D'AERONEFS

(30) Priorität: 05.01.2009 DE 102009004124
(43) Veröffentlichungstag der Anmeldung: 09.11.2011
(73) Patentinhaber: Liczbinski, Marc, 64342 Seeheim-Jugenheim (DE)
(72) Erfinder: Liczbinski, Marc, 64342 Seeheim-Jugenheim (DE)
(74) Vertreter: Katscher Habermann Patentanwälte
(86) Internationale Anmeldenummer: PCT/EP2009/008567
(87) Internationale Veröffentlichungsnummer: WO 2010/075923

(56) Entgegenhaltungen:
- CA-A1- 2 267 872
- DE-A1- 1 950 057
- GB-A- 2 313 972
- US-A- 4 404 705

## Beschreibung

Die Erfindung betrifft ein Verfahren zur äußeren Enteisung von Flugzeugen vor einem Start, wobei ein zu enteisender Bereich des Flugzeugs mit Heißluft beströmt und erwärmt wird, die aus einer in der Nähe des zu enteisenden Bereichs anordnenbaren Enteisungsdüse austritt.

Kühle und insbesondere feuchte winterliche Wetterverhältnisse können dazu führen, dass bei Flugzeugen exponierte Oberflächen wie beispielsweise der Rumpf, die Tragflächen, das Leitwerk oder der Triebwerkeinlass vereisen. Die oftmals unregelmäßig geformte, bzw. dicke Eisschicht kann unter anderem die Funktionsfähigkeit beweglicher Teile oder die aerodynamischen Eigenschaften des Flugzeugs beeinträchtigen und zu einer Gefährdung bei dem Betrieb des Flugzeugs führen.

Um die Sicherheit und einen reibungslosen Ablauf während des Flugbetriebs gewährleisten zu können werden je nach Witterungsverhältnissen und Eisbildung die von einer Vereisung betroffenen exponierten Oberflächen eines Flugzeugs unmittelbar vor dessen Start enteist und von störenden Eisablagerungen befreit.

Ortsfest angeordnete Enteisungsvorrichtungen für Flugzeuge werden beispielsweise in US 5 458 399 A oder US 6 616 102 B1 beschrieben. Diese und weitere aus der Praxis bekannten ortsfest angeordneten Enteisungsvorrichtungen weisen üblicherweise verfahrbare Ausleger und daran befestigte Sprühdüsen auf, mittels denen ein flüssiges Enteisungsmittel auf die vereisten Bereiche des Flugzeugs versprüht werden kann. Ortsfeste Enteisungsvorrichtungen, sogenannte Gantrys, haben sich aus verschiedenen Gründen in der Praxis nicht durchsetzen können.

In der Druckschrift JP 03 287 497 A wird ausgehend von einer in dem Inneren des Flugzeugs angeordneten Wärmequelle die dort erzeugte Wärme über geeignete Wärmeübertragungseinrichtungen wie beispielsweise "heat pipes" an die zu enteisende Außenhaut des Flugzeugs übertragen. Derartige Enteisungsvorrichtungen sind konstruktiv sehr aufwendig und kostspielig und können aufgrund der notwendigerweise mit Verlusten verbundenen Wärmeübertragung nur mit einem erheblichen Energieaufwand betrieben werden.

Aus der Praxis ist bekannt, dass von außen leicht zugängliche Bereiche und insbesondere die Turbinenschaufeln am Triebwerkeinlass mittels einer verfahrbaren Klimatisierungsvorrichtung enteist werden können. Die üblicherweise auf einem Kraftfahrzeug oder auf einem Anhänger angeordnete Klimatisierungsvorrichtung ist zur extern unterstützten Klimatisierung der Flugzeugkabine vorgesehen, um eine Klimatisierung des Flugzeugs unabhängig vom Betrieb oder bei Nichtverfügbarkeit eines bordeigenen Hilfsaggregats (APU) durchzuführen.. Die Klimatisierungsvorrichtung erzeugt dabei größere Mengen an gegebenenfalls klimatisierter Heißluft, die mit Hilfe eines Gebläses aus einem Schlauchende austritt und in die bordeigene Klimatisierungseinrichtung eingespeist werden kann. Derartige Klimatisierungsvorrichtungen werden jedoch nur in Ausnahmefällen verwendet, da in der Regel das bordeigene Hilfsaggregat zur Klimatisierung des Flugzeugs am Boden vorgesehen und geeignet ist.

Wenn das Schlauchende nicht mit der Einlassöffnung für klimatisierte Luft an dem Flugzeug verbunden wird, sondern über die zu enteisenden Bereiche gehalten wird, so wird durch die austretende Heißluft die dort befindliche Eisschicht abgeschmolzen und entfernt. In CA 2 267 872 A1 wird ein Schlauch mit einer Düse und mit einem an dem entgegengesetzten Ende angeordneten Adapter beschrieben, der mit einer derartigen Klimatisierungsvorrichtung verbunden werden kann und als Verlängerung des Verbindungsschlauchs dient, der üblicherweise die Klimatisierungsvorrichtung mit der Einlassöffnung für klimatisierte Luft an dem Flugzeug verbindet. Durch diese Verlängerung des Schlauches kann in Verbindung mit einer die austretende Heißluft fokussierenden Düse eine leichtere Enteisung äußerer Bereiche des Flugzeugs durchgeführt werden.

Da derartige verfahrbare Klimatisierungsvorrichtungen jedoch nicht zur Enteisung von Flugzeugen vorgesehen sind, eignen sich diese Vorrichtungen nicht uneingeschränkt für die Enteisung von Flugzeugen, bzw. ist deren Verwendung für diese Zwecke mit Nachteilen verbunden.

Anstelle der verfahrbaren Klimatisierungsvorrichtung können auch speziell für diese Verwendungszwecke vorgesehene mobile Enteisungsvorrichtungen verwendet werden. Dabei ist üblicherweise eine Vorrichtung zur Erzeugung von heißer Luft oder zum Versprühen eines flüssigen Enteisungsmittels auf einem Fahrzeug montiert. Die mit der Vorrichtung erzeugte Heißluft kann durch eine Enteisungsdüse hindurch auf die zu enteisenden Bereiche des Flugzeugs geblasen werden, um diese aufzuwärmen und Eisablagerungen abzuschmelzen. Derartige mobile Enteisungsvorrichtungen sind beispielsweise aus EP 0 95 481 B1 oder US 6 045 092 Cl bekannt.

Allerdings sind flüssige Enteisungsmittel nicht für eine Enteisung von Triebwerkseinlässen geeignet, da eine Kontamination des Triebwerkinneren und des Zapfluftsystems (Bleed Air System) nicht ausgeschlossen werden kann. Aus diesem Grund werden Triebwerkseinlässe und insbesondere die Turbinenschaufeln mit mechanischen Mitteln wie beispielsweise Heißluft oder aber mit Besen von Eis und Schnee befreit. Die Enteisung von Triebwerkseinlässen ist deshalb besonders aufwändig und zeitintensiv.

Weitere aus der Praxis bekannte Nachteile derartiger mobiler Enteisungsvorrichtungen sind die hohen Anschaffungs- und Betriebskosten, die regelmäßig dazu führen, dass die Anzahl der zur Verfügung stehenden Enteisungsvorrichtungen geringer als der Bedarf an Enteisungsvorrichtungen bei entsprechenden Witterungsverhältnissen ist. Da erfahrungsgemäß eine Eisbildung bei Flugzeugen, die deren Enteisung erforderlich werden lässt, lediglich an einigen Wochen im Jahr auftritt, müssen die aus der Praxis bekannten mobilen Enteisungsvorrichtungen die restliche Zeit abgestellt und in einem betriebsbereiten Zustand gehalten, beziehungsweise entsprechend gewartet werden. Wenn Enteisungen erforderlich werden, dann werden Enteisungsvorrichtungen jedoch in möglichst großer Stückzahl benötigt und sollen eine zuverlässige Enteisung in möglichst kurzer Zeit ermöglichen.

Aufgabe de vorliegenden Erfindung ist es demzufolge, ein Verfahren (Anspruch 1) zur äußeren Enteisung von Flugzeugen zu entwickeln, das eine rasche und zuverlässige Enteisung des Flugzeugs unmittelbar vor einem Start ermöglicht, ohne dass konstruktiv aufwendige Apparate und ein hoher Energieverbrauch oder hohe Betriebskosten erforderlich werden.

Diese Aufgabe wird erfindungsgemäß dadurch gelöst, dass aus einer Öffnung des Flugzeugs austretende Heißluft gesammelt und der Enteisungsdüse zugeführt wird.

In den meisten Fällen wird bereits über einen längeren Zeitraum vor dem Start des Flugzeugs dessen Energieversorgung durch bordeigene Energiequellen, beziehungsweise Energiewandler übernommen. Zu diesem Zweck wird beispielsweise ein Hilfstriebwerk (APU) des Flugzeugs auch bei dessen Stillstand betrieben und mittels einer Turbine Elektrizität, Heißluft und Druckluft erzeugt und zur Verteilung und Verwendung im Flugzeug bereit gestellt. Die oftmals komprimierte und erhitzte Heißluft, die aus dem Hilfstriebwerk strömt, wird auch als Bleed-Air bezeichnet. Diese Bleed-Air kann nach einer geeigneten Kühlung für die Klimatisierung der Flugzeugkabine am Boden verwendet werden. Während des Fluges dient die Bleed-Air der thermischen Enteisung von Triebwerkseinlässen und Flügelvorderkanten sowie der Klimatisierung und Druckbeaufschlagung der Flugzeugkabine während des Fluges. Der nicht genutzte Anteil der während des Betriebs der APU erzeugten erwärmten Abluft wird abgeführt.

Die zur Klimatisierung des Flugzeuginnenraums verwendete Heißluft wird durch geregelte Beimischung von kühler Außenluft oder üblicherweise durch Wärmetauscher abgekühlt, die mit angesaugter und anschließend wieder abgeführter Umgebungsluft umströmt werden. Diese angesaugte Umgebungsluft, die durch die umströmten Wärmetauscher erwärmt und anschließend wieder aus einer Heißluft-Austrittsöffnung aus dem Flugzeug ausströmt, kann auch als Ram-Air bezeichnet werden.

Die meisten Flugzeuge weisen an einer Unterseite des Rumpfes Heißluft-Austrittsöffnungen auf, aus denen die oftmals auf etwa 80°C bis 100°C erhitzte Ram-Air austritt und die deshalb auch als Ram-Air Outlet Flaps bezeichnet werden können.

Der Erfindung liegt die Idee zugrunde, diese zumindest vor dem Start aus dem Flugzeug austretende und bislang nicht weiter verwendete Heißluft für die Enteisung des Flugzeugs und insbesondere für die Enteisung der Triebwerkseinlässe nutzbar zu machen und zu verwenden. Die regelmäßig bereits mit einer ausreichenden Strömungsgeschwindigkeit austretende Heißluft muss dabei lediglich gesammelt und mittels eines Heißluftkanals, der in einer Enteisungsdüse endet, an die zu enteisenden Oberflächen geführt werden.

Die Verwendung externer Wärmeerzeugungsvorrichtungen oder größerer Mengen an flüssigem Enteisungsmittel ist nicht erforderlich. Das erfindungsgemäße Verfahren kann mit geringen Kosten und ohne größeren konstruktiven Aufwand durchgeführt werden und ermöglicht deshalb im Bedarfsfall eine zuverlässige und rasche Enteisung, so dass bei entsprechenden Witterungsverhältnissen lediglich eine geringfügige Beeinträchtigung des Flugbetriebs in Kauf genommen werden muss, sofern derartige Beeinträchtigungen nicht grundsätzlich sogar vermieden werden können.

Die für die Enteisung verwendete Heißluft kann aus einer beliebigen Heißluft-Austrittsöffnung des Flugzeugs stammen, so dass sowohl abgeführte Bleed-Air als auch Ram-Air oder andere Heißluftquellen des Flugzeugs verwendet werden könnten. Vorzugsweise ist jedoch vorgesehen, dass die aus einer Ram-Air-Austrittsöffnung austretende Heißluft der Enteisungsdüse zugeführt wird. Bei den meisten Flugzeugtypen steht auf etwa 80°C bis 100°C erhitzte Ram-Air in ausreichender Menge zur Verfügung. Da die Ram-Air üblicherweise zur Temperaturregelung und Klimatisierung der Flugzeugkabine verwendet wird und deshalb oftmals diesem Grund und zu diesem Zweck geregelte Temperatur- und Strömungseigenschaften aufweist, kann bei einer anschließenden Weiterverwendung der mit geregelten Eigenschaften austretenden Ram-Air ein sich einstellender selbstregulierender Effekt in vorteilhafterweise ausgenutzt werden. Würde beispielsweise die Strömungsgeschwindigkeit der aus der Ram-Air-Austrittsöffnung austretenden Heißluft auf Grund eines Strömungswiderstands merklich verringert und durch den dadurch bedingten Rückstau die Temperatur- und Druckverhältnisse der Ram-Air im Bereich um die im Flugzeuginneren angeordneten Wärmetauscher verändert, so würde die Menge und Strömungsgeschwindigkeit der aus der Umgebung angesaugten Ram-Air entsprechend angepasst werden, um eine ausreichende Kühlung der Wärmetauscher jederzeit gewährleisten zu können. Beeinträchtigungen durch die anschließende Weiterverwendung der austretenden Heißluft für Enteisungszwecke würden auf diese Weise teilweise oder vollständig kompensiert werden. Eine gesonderte Strömungsführung oder Temperatursteuerung der austretenden Heißluft, beziehungsweise Ram-Air erscheint deshalb nicht zwingend notwendig.

Um jedoch weitgehend unabhängig von den Eigenschaften der austretenden Heißluft zu sein kann es vorteilhaft sein, dass die Temperatur der aus der Enteisungsdüse austretenden Heißluft veränderbar ist. Um eine Gefährdung des Bedienpersonals oder eine Beschädigung der zu enteisenden Flugzeug-Außenfläche zu vermeiden kann die aus der Austrittsöffnung des Flugzeugs austretende Heißluft beispielsweise durch Beimischung von kalter Umgebungsluft abgekühlt werden. Die Beimischung kühler Umgebungsluft kann dabei manuell oder automatisch mit Hilfe eines Regelkreises vorgegeben werden.

Aus dem gleichen Grund kann es zweckmäßig sein, dass die Strömungsgeschwindigkeit der Heißluft auf dem Weg zur Enteisungsdüse veränderbar ist. Insbesondere bei Verwendung eines langen Schlauches, beziehungsweise eines flexiblen Heißluftkanals kann mittels eines geeigneten Gebläses oder Ventilators insbesondere in der Nähe der Enteisungsdüse mit einfachen Mitteln eine ausreichend hohe und gegebenenfalls vorgebare Strömungsgeschwindigkeit der aus der Enteisungsdüse austretenden Heißluft ermöglicht werden.

Die Erfindung betrifft auch eine Vorrichtung (Anspruch 5) zur äußeren Enteisung von Flugzeugen vor einem Start, mit einem flexiblen Heißluftkanal und einer an einem ersten Ende des Heißluftkanals angeordneten Enteisungsdüse.

Erfindungsgemäß ist vorgesehen, dass die Vorrichtung eine Sammeleinrichtung für aus dem Flugzeug austretende Heißluft aufweist, die mit einem zweiten Ende des Heißluftkanals verbunden ist, wobei die Sammeleinrichtung im Wesentlichen allseitig geschlossen ausgestaltet ist und lediglich eine Eintrittsöffnung für die aus dem Flugzeug austretende Heißluft sowie einen Anschluss an das damit befestigte Ende des Heißluftkanals aufweist und wobei die Eintrittsöffnung an die Abmessungen der Heißluft-Austrittsöffnung des Flugzeugs angepasst ist, aus der die zum Enteisen verwendete Heißluft aus dem Flugzeug austritt. Der flexible Heißluftkanal kann beispielsweise ein ausreichend temperaturbeständiger Heißluftschlauch sein. Die Länge des flexiblen Heißluftkanals ist zweckmäßigerweise an den maximalen Abstand der zu enteisenden Bereiche des Flugzeugs von der jeweils verwendeten Heißluft-Austrittsöffnung des Flugzeugs angepasst.

Gemäß einer Ausgestaltung des Erfindungsgedankens ist vorgesehen, dass die Sammeleinrichtung ein Gehäuse mit einer Eintrittsöffnung aufweist, wobei das Gehäuse eine Heißluft-Austrittsöffnung umgebend an einer Flugzeugaußenwand festlegbar ist. Zu diesem Zweck kann die Sammeleinrichtung beispielsweise von außen an die Flugzeugaußenwand herangeführt, beziehungsweise angepresst und in dieser Position fixiert werden, um die aus Heißluft-Austrittsöffnung austretende Heißluft möglichst effizient und vollständig mit der Sammeleinrichtung aufnehmen und dem Heißluftkanal zuführen zu können. Es ist jedoch auch denkbar, im Bereich um die zu verwendende Heißluft-Austrittsöffnung an der Flugzeugaußenwand geeignete Befestigungsvorrichtungen zum möglichst luftdichten Befestigen der Sammeleinrichtung auszubilden und anzubringen. Die Eintrittsöffnung der Sammeleinrichtung kann auch derart an die Heißluft-Austrittsöffnung der Flugzeugaußenwand angepasst sein, dass die Eintrittsöffnung nach außen vorspringende Rasthaken oder dergleichen aufweist, die einen Rand der Heißluft-Austrittsöffnung des Flugzeugs umgreifen und eine formschlüssige Verbindung der Sammeleinrichtung mit der Heißluft-Austrittsöffnung, beziehungsweise der umgebenden Flugzeugaußenwand ermöglichen.

Um eine Beschädigung der Flugzeugaußenwand während der Positionierung und Anordnung der Sammeleinrichtung an der Flugzeugaußenwand zu vermeiden und gleichzeitig eine bessere Abdichtung der Sammeleinrichtung zu gegebenenfalls gekrümmten Oberflächen der Flugzeugaußenwand im Bereich um die Heißluft-Austrittsöffnung des Flugzeugs zu ermöglichen ist vorgesehen, dass die Sammeleinrichtung an einer der Flugzeugaußenwand zugewandten Seite um die Eintrittsöffnung angeordnete Dichtmittel aufweist. In den meisten Fällen dürfte eine elastische Dichtlippe oder ein die Eintrittsöffnung umgebender Gummiwulst bereits ausreichen, um eine in der Praxis ausreichende Abdichtung gewährleisten zu können und gleichzeig eine ausreichende Anpassung der Sammeleinrichtung an die Flugzeugaußenwand auch bei unterschiedlichen Flugzeugtypen zu ermöglichen.

Um eine Anpassung der Eintrittsöffnung an verschiedene Heißluft-Austrittsöffnungen bei unterschiedlichen Flugzeugtypen zu ermöglichen ist vorgesehen, dass eine Querschnittsfläche der Eintrittsöffnung veränderbar ist.

Vorzugsweise ist zu diesem Zweck vorgesehen, dass an der Eintrittsöffnung eine die Querschnittsfläche der Eintrittsöffnung verändernde Adaptereinrichtung anbringbar ist. Mit der Adaptereinrichtung kann in jedem Einzelfall eine kostengünstige sowie einfach und rasch handhabbare Anpassung der Eintrittsöffnung der Sammeleinrichtung an unterschiedlich ausgestaltete Heißluft-Austrittsöffnungen verschiedener Flugzeugtypen vorgenommen werden.

Die Adaptereinrichtung kann beispielsweise ein trichterförmiger Aufsatz sein und klemmend oder rastend im Bereich der Eintrittsöffnung mit dem Gehäuse der Sammeleinrichtung verbunden werden. Die Eintrittsöffnung ist zweckmäßigerweise an einer Oberseite des Gehäuses der Sammeleinrichtung angeordnet, um von unten an die üblicherweise an einer Unterseite des Flugzeugrumpfes befindlichen Heißluft-Austrittsöffnung herangeführt und dicht an den Flugzeugrumpf angepresst werden zu können. In den meisten Fällen dürfte es ausreichen, wenn auf die Eintrittsöffnung des Gehäuses ein trichterförmiger Aufsatz von oben aufgesteckt und klemmend an dem Gehäuse festgelegt wird. Durch das Eigengewicht des trichterförmigen Aufsatzes wird dieser auf das Gehäuse gedrückt und in der Eintrittsöffnung zurückgehalten.

Der trichterförmige Aufsatz kann zusätzlich Befestigungselemente oder Rastelemente aufweisen, die ein unbeabsichtigtes Lösen des trichterförmigen Aufsatzes von dem Gehäuse während des Betriebs verhindern.

Der trichterförmige Aufsatz kann ebenfalls an einer der Flugzeugaußenwand zugewandten Seite um die Eintrittsöffnung des trichterförmigen Aufsatzes angeordnete Dichtmittel aufweisen.

Es ist ebenfalls denkbar, dass die Eintrittsöffnung mittels einer schwenkbar gelagerten Klappe veränderbar ist. Die schwenkbar gelagerte Klappe kann zwischen einer die Eintrittsöffnung vollständig öffnenden Durchlassstellung und einer die Eintrittsöffnung vollständig bedeckenden Verschlussstellung beliebig verlagert werden.

Gemäß einer besonders vorteilhaften Ausgestaltung des Erfindungsgedankens ist vorgesehen, dass die schwenkbar gelagerte Klappe entgegen einer Rückstellkraft aus einer geschlossene Position in eine teilweise oder vollständig geöffnete Position verlagerbar ist. Die Rückstellkraft kann beispielsweise durch geeignete angeordnete Zugfedern oder Druckfedern oder aber mittels eines Seilzugmechanismus und daran befestigten Gewichten erzeugt werden.

Um die Temperatur der aus der Enteisungsdüse der Vorrichtung austretenden Heißluft beeinflussen zu können ist vorgesehen, dass die Sammeleinrichtung oder der Heißluftkanal verschließbare Öffnungen zur Beimischung von kühler Außenluft aufweist. Die verschließbaren Öffnungen können dabei manuell betätigbar ausgestaltet sein oder automatisiert betätigt werden, um eine gesteuerte oder geregelte Beimischung von kühler Außenluft zu ermöglichen. Die Vorrichtung kann dabei einen Temperatursensor oder eine Temperaturanzeige aufweisen, um eine von einem Benutzer oder automatisiert gesteuerte oder geregelte Beimischung von kühler Außenluft zu ermöglichen und auf diese Weise der Temperatur der aus der Enteisungsdüse austretenden Heißluft vorzugeben.

Um die Strömungsgeschwindigkeit, beziehungsweise den Durchsatz der aus der Enteisungsdüse austretenden Heißluft beeinflussen zu können ist vorgesehen, dass die Vorrichtung mindestens eine Einrichtung zur Strömungserzeugung aufweist. Geeignete Einrichtungen zur Strömungserzeugung können beispielsweise Ventilatoren oder Gebläse sein, die vorzugsweise im Bereich der Sammeleinrichtung oder der Enteisungsdüse angeordnet sind und insbesondere bei Verwendung langer Heißluftkanäle die Heißluftströmung in dem Heißluftkanal unterstützen, Aufrecht erhalten oder verstärken. Um für einzelne Anwendungsfälle auch eine Verminderung der Strömungsgeschwindigkeit der aus der Enteisungsdüse austretenden Heißluft bewirken zu können, können zusätzlich Strömungshindernisse wie beispielsweise nach Innen ragende Lamellen vorgegeben sein, die bei Bedarf verlagert oder verschwenkt werden können und die Strömungsgeschwindigkeit der Heißluft in dem Heißluftkanal vermindern.

Gemäß einer Ausgestaltung des Erfindungsgedankens ist vorgesehen, dass die Sammeleinrichtung höhenverstellbar auf einem verfahrbaren Gestell gelagert ist. Die Vorrichtung zur äußeren Enteisung von Flugzeugen kann entweder von Hand oder mittels eines ziehenden Fahrzeugs an das zu enteisende Flugzeug herangezogen und im Bereich der Heißluft-Austrittsöffnung positioniert werden. Mittels eines geeigneten Höhenverstellmechanismus wie beispielsweise einer ausfahrbaren Teleskopstange kann die Sammeleinrichtung an die Heißluft-Austrittsöffnung herangeführt und dicht an der umgebenden Flugzeugaußenwand angeordnet, beziehungsweise festgelegt werden. Sowohl der Höhenverstellmechanismus als auch das verfahrbare Gestell können manuell oder automatisierbar, beziehungsweise selbsttätig verfahrbar ausgestaltet sein.

Nachfolgend werden Ausführungsbeispiele des Erfindungsgedankens näher erläutert, die in der Zeichnung dargestellt sind. Es zeigt:
Figur 1 eine schematische Seitenansicht einer Vorrichtung zur äußeren Enteisung eines Flugzeugs,
Figur 2 eine Seitenansicht der Vorrichtung gemäß Figur 1, wobei zusätzlich ein zu enteisender Triebwerkeinlass schematisch dargestellt ist,
Figur 3 eine schematische Schnittansicht der in Figur 2 dargestellten Vorrichtung in einer vergrößerten Darstellung,
Figur 4 eine Schnittansicht gemäß Figur 3, wobei eine geringfügig modifizierte Vorrichtung zur Enteisung dargestellt ist, und
Fig. 5 eine Seitenansicht einer mit einer zusätzlichen Adaptereinrichtung versehenen Vorrichtung gemäß Figur 1.

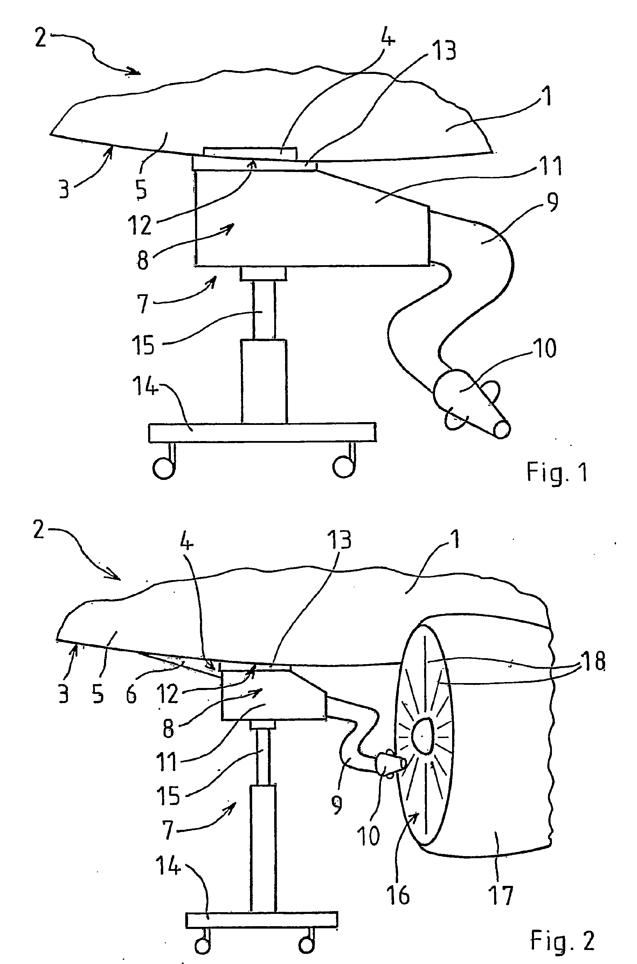

In den Figuren 1 bis 5 wird ein Ausschnitt eines Flugzeugrumpfes 1 eines Flugzeugs 2 dargestellt. An einer Unterseite 3 des Flugzeugrumpfes 1 befindet sich eine Heißluft-Austrittsöffnung 4. Während die Heißluft-Austrittsöffnung 4 bei dem in Figur 1 dargestellten Ausführungsbeispiel lediglich eine bündig mit der Unterseite 3 verlaufende Öffnung in einer Außenhaut 5 des Flugzeugs 2 aufweist, wird die Heißluft-Austrittsöffnung 4 bei den in den Figuren 2 bis 4 dargestellten Ausführungsbeispiele mit einer schwenkbar gelagerten Austrittsöffnungsklappe 6 verschlossen, die während des Betriebs die Heißluft-Austrittsöffnung 4 teilweise oder vollständig freigibt.

Die eingesaugte und anschließend wieder ausgeblasene Umgebungsluft kann als Ram-Air bezeichnet werden. Bei der in den Figuren 1 bis 4 dargestellten Heißluft-Austrittsöffnung handelt es sich jeweils um Austrittsöffnungen für Ram-Air, die bei vielen Flugzeugtypen an der Unterseite 3 des Flugzeugrumpfes 1 angeordnet ist und aus der die für die Klimatisierung einer Flugzeugkabine erforderliche und an einer anderen Stelle angesaugten Umgebungsluft wieder ausgeblasen wird. Bei den in den Figuren 2 bis 4 dargestellten Ausführungsbeispielen weist die Heißluft-Austrittsöffnung 4 eine sogenannte Ram-Air Outlet Flap auf.

Eine Vorrichtung 7 zur äußeren Enteisung von Flugzeugen weist eine Sammeleinrichtung 8 für die aus der Heißluft-Austrittsöffnung 4 austretende Ram-Air auf. An die Sammeleinrichtung 8 ist ein flexibler Heißluftkanal 9 angeschlossen, der bei den dargestellten Ausführungsbeispielen aus einem ausreichend temperaturbeständigen flexiblen Schlauch besteht. Der flexible Heißluftkanal 9 mündet in eine Enteisungsdüse 10, aus der die mit der Sammeleinrichtung 8 aufgefangene und durch den Heißluftkanal 9 hindurchgeführte Heißluft gerichtet auf die zu enteisenden Bereiche des Flugzeugs 2 ausströmen kann.

Die Sammeleinrichtung 8 weist bei dem in Figur 1 schematisch dargestellten Ausführungsbeispiel ein im Wesentlichen allseitig geschlossenes Gehäuse 11 mit einer der Heißluft-Austrittsöffnung 4 zugewandten und an deren Abmessungen angepasste Eintrittsöffnung 12 auf. Die Eintrittsöffnung 12 ist auf der der Flugzeugaußenwand 5 zugewandten Seite von einer umlaufenden Dichtlippe 13 aus einem elastischen Material umgeben. Die Dichtlippe 13 liegt eng an der geringfügig gekrümmten Flugzeugaußenwand 5 an und verhindert ein Ausströmen der von der Sammeleinrichtung 8 aufgefangenen Heißluft.

Die Sammeleinrichtung 8 ist auf einem verfahrbaren Gestell 14 höhenverstellbar gelagert. Die Höhenverstellung wird mittels eines ausfahrbaren Teleskoprohrs 15 bewirkt.

In Figur 2 wird lediglich exemplarisch und schematisch die Verwendung der Vorrichtung 7 zur Enteisung eines Triebwerkseinlasses 16 eines an einem nicht dargestellten Flügel des Flugzeugs 2 angeordneten Triebwerks 17 dargestellt. Mittels der Enteisungsdüse 10 kann die aus der Vorrichtung 7 austretende Heißluft gezielt auf zu enteisende Turbinenschaufeln 18 des Triebwerks 17 gerichtet werden, um die Turbinenschaufeln 18 zu erwärmen und eine dort befindliche Eisschicht abzuschmelzen.

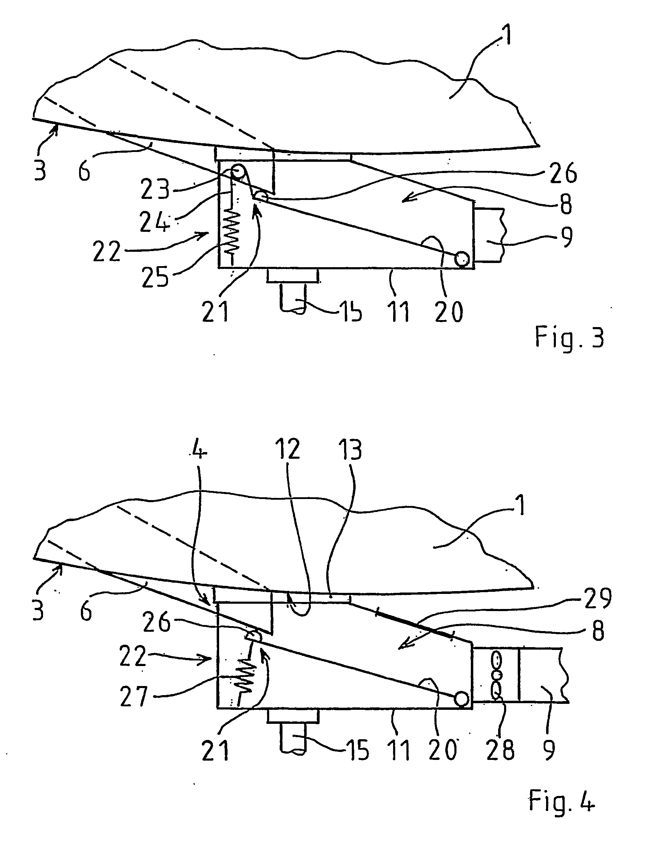

Bei dem in Figur 3 dargestellten Ausführungsbeispiel weist das Gehäuse 11 der Sammeleinrichtung 8 eine in einem Gehäuseinneren 19 schwenkbar gelagerte Klappe 20 auf. Das Gehäuse 11 ist an einer einem schwenkbaren Ende 21 der Klappe 20 zugeordneten Gehäuseseite 22 offen. Die schwenkbar gelagerte Klappe 20 kann nach oben verschwenkt und dicht anliegend an die Austrittsöffnungsklappe 6 der Heißluft-Austrittsöffnung 4 des Flugzeugs 2 verlagert, bzw. in dieser Position gehalten oder arretiert werden. Das schwenkbare Ende 21 der Klappe 20 steht mittels eines um eine Umlenkrolle 23 geführten Seilzugs 24 mit einer Zugfeder 25 derart in Wirkverbindung, dass das schwenkbare Ende 21 der Klappe 20 selbsttätig dicht an die Austrittsöffnungsklappe 6 herangeführt und angedrückt wird. An dem schwenkbaren Ende 21 der Klappe 20 ist ein weiterer Dichtstreifen 26 aus einem elastischen, abdichtenden Material angeordnet.

Wenn durch in dem Flugzeug 2 befindliche Regelungssystem die Austrittsöffnungsklappe 6 der Heißluft-Austrittsöffnung 4 weiter geöffnet oder etwas mehr geschlossen wird, so wird die schwenkbar gelagerte Klappe 20 selbsttätig nachgeführt, um jederzeit einen möglichst dicht verschlossenen Übergang von der Heißluft-Austrittsöffnung 4 zu der Sammeleinrichtung 8 der Vorrichtung 7 zur Enteisung des Flugzeugs 2 zu gewährleisten.

Bei dem in Figur 4 dargestellten Ausführungsbeispiel wird das schwenkbare Ende 21 der Klappe 20 mittels einer Druckfeder 27 in Richtung der Eintrittsöffnung 12, bzw. der Heißluft-Austrittsöffnung 4 und dadurch ebenfalls dicht an die teilweise geöffnete Austrittsöffnungsklappe 6 verschwenkt und dicht anliegend angepresst. Zwischen der Sammeleinrichtung 8 und dem flexiblen Heißluftkanal 9 ist eine Einrichtung zur Strömungserzeugung 28 in Form eines Ventilators angeordnet. Die Sammeleinrichtung 8 weist eine verschließbare Öffnung 29 auf, durch welche hindurch eine Beimischung von kühler Umgebungsluft zu dem aus der Enteisungsdüse 10 austretenden Heißluftstrom ermöglicht wird.

Bei Verwendung einer Sammeleinrichtung 8 gemäß den in Figur 3 oder Figur 4 beschriebenen Ausführungsbeispielen bei einer bündig an der Flugzeug-Außenwand 5 abschließenden Heißluft-Austrittsöffnung 4 ohne Ram-Air Outlet Flap, bzw. ohne Austrittsöffnungsklappe 6 bewirkt die Rückstellkraft der Zugfeder 25 oder der Druckfeder 27, dass das schwenkbare Ende 21 der Klappe 20 dichtend an der Unterseite 3 des Flugzeugrumpfes 1 anliegt und die aus der Heißluft-Austrittsöffnung 4 austretende Heißluft durch die Eintrittsöffnung 12 in die Sammeleinrichtung 8 eintreten kann. Die Sammeleinrichtung 8 ist demzufolge gleichermaßen für Heißluft-Austrittsöffnungen 4 mit und ohne Austrittsöffnungsklappe 6 geeignet und könnte mit einfachen konstruktiven Mitteln auch an beispielsweise seitlich angeordnete Heißluft-Austrittsöffnungen 4 oder unterschiedliche Abmessungen und Formgebungen von Heißluft-Austrittsöffnungen 4 angepasst werden.

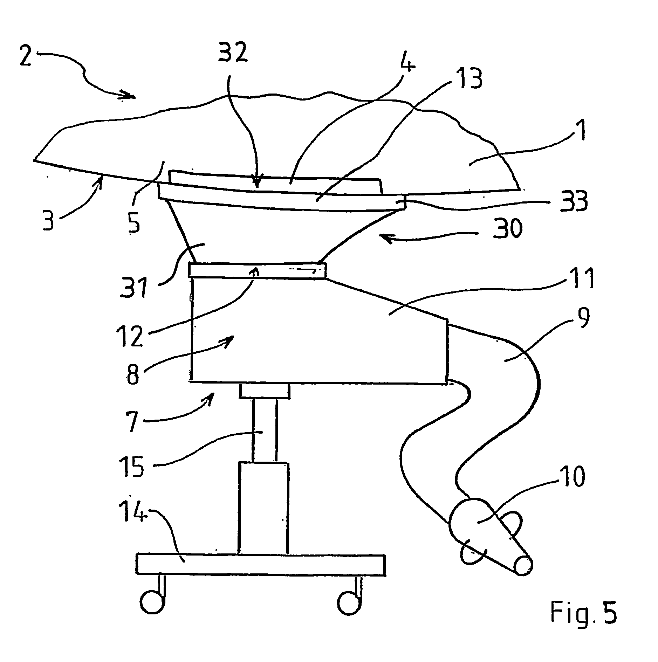

Bei dem in Fig. 5 dargestellten Ausführungsbeispiel ist auf die oben angeordnete Eintrittsöffnung 12 des Gehäuses 11 der Sammeleinrichtung 8, die ansonsten mit der in den Figur 1 und 2 dargestellten Sammeleinrichtung 8 übereinstimmt, eine Adaptereinrichtung 30 aufgesetzt. Die Adaptereinrichtung 30 weist einen trichterförmigen Aufsatz 31 aus Blech oder einem anderen ausreichend temperaturbeständigen Material auf. Der trichterförmigen Aufsatz 31 ist in die Eintrittsöffnung 12 des Gehäuses 11 eingesteckt und in dieser Position klemmend festgelegt, wobei das Eigengewicht des trichterförmigen Aufsatzes 31 ein unbeabsichtigtes Lösen des trichterförmigen Aufsatzes 31 von dem Gehäuse 11 in den meisten Fällen zuverlässig verhindern kann.

Es können nicht dargestellte zusätzliche Befestigungsmittel oder Rastelemente vorgesehen sein, die im Bedarfsfall eine formschlüssige Festlegung des trichterförmigen Aufsatzes 31 an dem Gehäuse 11 ermöglichen.

Die der Heißluft-Austrittsöffnung 4 zugewandte Öffnung 32 des trichterförmigen Aufsatzes 31 weist eine größere Querschnittsfläche als die Eintrittsöffnung 12 auf und ist an die entsprechend größere Heißluft-Austrittsöffnung 4 eines anderen Flugzeugtyps angepasst. Um einen abgedichteten Übergang von der Heißluft-Austrittsöffnung 4 in den trichterförmigen Aufsatz 31 und in die Sammeleinrichtung 8 zu ermöglichen weist auch die der Flugzeugaußenwand 5 zugewandten Seite des trichterförmigen Aufsatzes 31 eine umlaufende Dichtlippe 33 aus einem elastischen Material auf.

Die Sammeleinrichtung 8 kann kostengünstig weitgehend aus Blech oder einem ausreichend temperaturbeständigen Kunststoff hergestellt sein. Das Gesamtgewicht der Vorrichtung 7 kann möglichst klein sein, um eine einfache Betätigung und insbesondere ein einfaches Verfahren der Vorrichtung 7 zu dem zu enteisenden Flugzeug 2 hin und wieder von dort weg zu ermöglichen.

## Patentansprüche

1. Verfahren zur äußeren Enteisung von Flugzeugen vor einem Start, wobei ein zu enteisender Bereich des Flugzeugs mit Heißluft beströmt und erwärmt wird, die aus einer in der Nähe des zu enteisenden Bereichs anordnenbaren Enteisungsdüse austritt, **dadurch gekennzeichnet, dass** aus einer Heißluft-Austrittsöffnung (4) des Flugzeugs (2) austretende Heißluft gesammelt und der Enteisungsdüse (10) zugeführt wird.

2. Verfahren nach Anspruch 1, **dadurch gekennzeichnet, dass** die aus einer Ram-Air-Austrittsöffnung austretende erwärmte Ram-Air der Enteisungsdüse (10) zugeführt wird.

3. Verfahren nach Anspruch 1 oder Anspruch 2, **dadurch gekennzeichnet, dass** die Temperatur der aus der Enteisungsdüse (10) austretenden Heißluft veränderbar ist.

4. Verfahren nach einem der vorangehenden Ansprüche, **dadurch gekennzeichnet, dass** die Strömungsgeschwindigkeit der Heißluft auf dem Weg zur Enteisungsdüse (10) veränderbar ist.

5. Vorrichtung zur äußeren Enteisung von Flugzeugen vor dem Start, mit einem flexiblen Heißluftkanal und mit einer an einem ersten Ende des Heißluftkanals angeordneten Enteisungsdüse, **dadurch gekennzeichnet, dass** die Vorrichtung (7) eine Sammeleinrichtung (8) für aus dem Flugzeug (2) austretende Heißluft aufweist, die mit einem zweiten Ende des Heißluftkanals (9) verbunden ist, wobei die Sammeleinrichtung (8) im Wesentlichen allseitig geschlossen ausgestaltet ist und lediglich eine Eintrittsöffnung (12) für die aus dem Flugzeug austretende Heißluft sowie einen Anschluss an das damit befestigte Ende des Heißluftkanals (9) aufweist und wobei die Eintrittsöffnung (12) an die Abmessungen der Heißluft-Austrittsöffnung (4) des Flugzeugs angepasst ist, aus der die zum Enteisen verwendete Heißluft aus dem Flugzeug austritt.

6. Vorrichtung nach Anspruch 5, **dadurch gekennzeichnet, dass** die Sammeleinrichtung (8) ein Gehäuse (11) mit einer Eintrittsöffnung (12) aufweist, wobei das Gehäuse (11) eine Heißluft-Austrittsöffnung (4) umgebend an einer Flugzeugaußenwand (5) festlegbar ist.

7. Vorrichtung nach Anspruch 5 oder Anspruch 6, **dadurch gekennzeichnet, dass** die Sammeleinrichtung (8) an einer der Flugzeugaußenwand (5) zugewandten Seite um die Eintrittsöffnung (12) angeordnete Dichtmittel (13) aufweist.

8. Vorrichtung nach einem der Ansprüche 5 bis 7, **dadurch gekennzeichnet, dass** eine Querschnittsfläche der Eintrittsöffnung (12) veränderbar ist.

9. Vorrichtung nach Anspruch 8, **dadurch gekennzeichnet, dass** an der Eintrittsöffnung (12) eine die Querschnittsfläche der Eintrittsöffnung (12) verändernde Adaptereinrichtung (30) anbringbar ist.

10. Vorrichtung nach Anspruch 9, **dadurch gekennzeichnet, dass** die Adaptereinrichtung (30) ein trichterförmiger Aufsatz (31) ist.

11. Vorrichtung nach Anspruch 9 oder Anspruch 10, **dadurch gekennzeichnet, dass** die Adaptereinrichtung (30) klemmend oder rastend im Bereich der Eintrittsöffnung (12) mit dem Gehäuse (11) der Sammeleinrichtung (8) verbindbar ist.

12. Vorrichtung nach einem der Ansprüche 8 bis 11, **dadurch gekennzeichnet, dass** die Eintrittsöffnung (12) mittels einer schwenkbar gelagerten Klappe (20) veränderbar ist.

13. Vorrichtung nach Anspruch 12, **dadurch gekennzeichnet, dass** die schwenkbar gelagerte Klappe (20) entgegen einer Rückstellkraft aus einer geschlossenen Position in eine teilweise oder vollständig geöffnete Position verlagerbar ist.

14. Vorrichtung nach einem der Ansprüche 5 bis 13, **dadurch gekennzeichnet, dass** die Sammeleinrichtung (8) oder der Heißluftkanal (9) verschließbare Öffnungen (29) zur Beimischung von kühler Außenluft aufweist.

15. Vorrichtung nach einem der Ansprüche 5 bis 14, **dadurch gekennzeichnet, dass** die Vorrichtung (7) mindestens eine Einrichtung zur Strömungserzeugung (28) aufweist.

16. Vorrichtung nach einem der Ansprüche 5 bis 15, **dadurch gekennzeichnet, dass** die Sammeleinrichtung (8) höhenverstellbar auf einem verfahrbaren Gestell (14) gelagert ist.

## Claims

1. Method for the external de-icing of aircraft before takeoff, wherein a region of the aircraft to be de-iced is warmed using a flow of hot air exiting from a de-icing nozzle which can be arranged in the vicinity of the region to be de-iced, **characterized in that** hot air exiting from a hot air outlet opening (4) of the aircraft (2) is collected and conveyed to the de-icing nozzle (10).

2. Method according to Claim 1, **characterized in that** the warmed ram air exiting from a ram air outlet opening is conveyed to the de-icing nozzle (10).

3. Method according to Claim 1 or Claim 2, **characterized in that** the temperature of the hot air exiting from the de-icing nozzle (10) can be adjusted.

4. Method according to one of the preceding claims, **characterized in that** the flow speed of the hot air can be adjusted on the way to the de-icing nozzle (10).

5. Device for the external de-icing of aircraft before takeoff, having a flexible hot air duct and a de-icing nozzle arranged at a first end of the hot air duct, **characterized in that** the device (7) has a collector unit (8) for hot air exiting from the aircraft (2), which unit is connected to a second end of the hot air duct (9), the collector unit (8) being designed so as to be substantially closed on all sides and having only one inlet opening (12) for the hot air exiting from the aircraft as well as a connection to the end of the hot air duct (9) fastened thereto, and the inlet opening (12) being adapted to the dimensions of the hot air outlet opening (4) of the aircraft, out of which opening the hot air used for de-icing exits from the aircraft.

6. Device according to Claim 5, **characterized in that** the collector unit (8) has a housing (11) with an inlet opening (12), it being possible for the housing (11) to be attached to an outer wall (5) of an aircraft in a manner surrounding a hot air outlet opening (4).

7. Device according to Claim 5 or Claim 6, **characterized in that** the collector unit (8) has sealing means (13) arranged around the inlet opening (12) on a side which faces the outer wall (5) of the aircraft.

8. Device according to one of Claims 5 to 7, **characterized in that** a cross sectional area of the inlet opening (12) can be altered.

9. Device according to Claim 8, **characterized in that** an adapter unit (30) which alters the cross sectional area of the inlet opening (12) can be installed on the latter.

10. Device according to Claim 9, **characterized in that** the adapter unit (30) is a funnel-shaped cap (31).

11. Device according to Claim 9 or Claim 10, **characterized in that** the adapter unit (30) can be connected in a clamping or locking manner to the housing (11) of the collector unit (8) in the region of the inlet opening (12).

12. Device according to one of Claims 8 to 11, **characterized in that** the inlet opening (12) can be adjusted by means of a pivotably mounted flap (20).

13. Device according to Claim 12, **characterized in that** the pivotably mounted flap (20) can be shifted against a restoring force from a closed position into a partially open or completely open position.

14. Device according to one of Claims 5 to 13, **characterized in that** the collector unit (8) or the hot air duct (9) has closable openings (29) for admixing cold outside air.

15. Device according to one of Claims 5 to 14, **characterized in that** the device (7) has at least one flow-generating unit (28).

16. Device according to one of Claims 5 to 15, **characterized in that** the collector unit (8) is mounted on a mobile framework (14) in a height-adjustable manner.

## Revendications

1. Procédé pour le dégivrage extérieur d'aéronefs avant un démarrage, dans lequel on balaie et on chauffe une zone de l'aéronef à dégivrer avec de l'air chaud qui sort d'une buse de dégivrage pouvant être disposée à proximité de la zone à dégivrer, **caractérisé en ce que** l'on collecte l'air chaud sortant d'une ouverture de sortie d'air chaud (4) de l'aéronef (2) et on l'envoie à la buse de dégivrage (10).

2. Procédé selon la revendication 1, **caractérisé en ce que** l'on envoie à la buse de dégivrage (10) l'air dynamique chauffé sortant d'une ouverture de sortie d'air dynamique.

3. Procédé selon la revendication 1 ou la revendication 2, **caractérisé en ce que** la température de l'air chaud sortant de la buse de dégivrage (10) est variable.

4. Procédé selon l'une quelconque des revendications précédentes, **caractérisé en ce que** la vitesse d'écoulement de l'air chaud sur le chemin jusqu'à la buse de dégivrage (10) est variable.

5. Dispositif pour le dégivrage extérieur d'aéronefs avant le démarrage, avec un canal d'air chaud flexible et avec une buse de dégivrage disposée à une première extrémité du canal d'air chaud, **caractérisé en ce que** le dispositif (7) présente un dispositif de collecte (8) pour de l'air chaud sortant de l'aéronef (2), qui est raccordé à une deuxième extrémité du canal d'air chaud (9), dans lequel le dispositif de collecte (8) est de nature fermée essentiellement sur tous les côtés et présente uniquement une ouverture d'entrée (12) pour l'air chaud sortant hors de l'aéronef ainsi qu'un raccordement à l'extrémité du canal d'air chaud (9) qui y est fixée et dans lequel l'ouverture d'entrée (12) est adaptée aux dimensions de l'ouverture de sortie d'air chaud (4) de l'aéronef, par laquelle l'air chaud utilisé pour le dégivrage sort de l'aéronef.

6. Dispositif selon la revendication 5, **caractérisé en ce que** le dispositif de collecte (8) présente une enceinte (11) avec une ouverture d'entrée (12), dans lequel l'enceinte (11) peut être fixée à une paroi extérieure (5) de l'aéronef en entourant une ouverture de sortie d'air chaud (4).

7. Dispositif selon la revendication 5 ou la revendication 6, **caractérisé en ce que** le dispositif de collecte (8) présente, sur un côté tourné vers la paroi extérieure (5) de l'aéronef, des moyens d'étanchéité (13) disposés autour de l'ouverture d'entrée (12).

8. Dispositif selon l'une quelconque des revendications 5 à 7, **caractérisé en ce qu'**une aire de section transversale de l'ouverture d'entrée (12) est variable.

9. Dispositif selon la revendication 8, **caractérisé en ce qu'**un dispositif adaptateur (30) faisant varier l'aire de la section transversale de l'ouverture d'entrée (12) peut être installé sur l'ouverture d'entrée (12).

10. Dispositif selon la revendication 9, **caractérisé en ce que** le dispositif adaptateur (30) est un élément en forme d' entonnoir (31).

11. Dispositif selon la revendication 9 ou la revendication 10, **caractérisé en ce que** le dispositif adaptateur (30) peut être assemblé à l'enceinte (11) du dispositif de collecte (8) par serrage ou par emboîtement dans la région de l'ouverture d'entrée (12).

12. Dispositif selon l'une quelconque des revendications 8 à 11, **caractérisé en ce que** l'ouverture d'entrée (12) est variable au moyen d'un clapet (20) monté de façon pivotante.

13. Dispositif selon la revendication 12, **caractérisé en ce que** le clapet (20) monté de façon pivotante peut être déplacé contre une force de rappel depuis une position fermée jusqu'à une position partiellement ou complètement ouverte.

14. Dispositif selon l'une quelconque des revendications 5 à 13, **caractérisé en ce que** le dispositif de collecte (8) ou le canal d'air chaud (9) présente des ouvertures (29) pouvant être fermées pour l'ajout d'air extérieur froid.

15. Dispositif selon l'une quelconque des revendications 5 à 14, **caractérisé en ce que** le dispositif (7) présente au moins un dispositif de production d'un écoulement (28).

16. Dispositif selon l'une quelconque des revendications 5 à 15, **caractérisé en ce que** le dispositif de collecte (8) est monté de façon réglable en hauteur sur un châssis déplaçable (14).
